# EUROPÄISCHE PATENTSCHRIFT

(11) **EP 2 736 768 B1**
(45) Veröffentlichungstag und Bekanntmachung des Hinweises auf die Patenterteilung: **06.04.2016**
(21) Anmeldenummer: 12719585.7
(22) Anmeldetag: 28.04.2012
(51) Int. Cl.: B60Q 5/00, B60K 35/00, B60W 50/14, G10K 15/02

(54) **VERFAHREN ZUR INFORMATION EINES FAHRERS BEZÜGLICH DES BETRIEBSZUSTANDS EINES KRAFTFAHRZEUGES UND KRAFTFAHRZEUG MIT EINER STEUEREINRICHTUNG ZUR DURCHFÜHRUNG DES VERFAHRENS**
METHOD FOR INFORMING A DRIVER ABOUT THE OPERATING STATE OF A VEHICLE AND VEHICLE HAVING A CONTROL UNIT FOR EXECUTING THE METHOD
PROCEDE POUR L'INFORMATION D'UN CONDUCTEUR D'UN ETAT DE MARCHE D'UN VEHICULE ET VEHICULE COMPORTANT UNE UNITE DE COMMANDE EXECUTANT LE PROCEDE

(30) Priorität: 29.07.2011 DE 102011108956
(43) Veröffentlichungstag der Anmeldung: 04.06.2014
(73) Patentinhaber: Audi AG, 85045 Ingolstadt (DE)
(72) Erfinder: SCHÜSSLER, Martin, 85092 Kösching (DE)
(74) Vertreter: Brandt, Kai
(86) Internationale Anmeldenummer: PCT/EP2012/001837
(87) Internationale Veröffentlichungsnummer: WO 2013/017180

(56) Entgegenhaltungen:
- EP-A2- 2 202 111
- DE-A1- 3 832 970
- DE-A1-102007 060 646
- DE-A1-102008 039 481
- DE-A1-102008 040 139
- DE-A1-102011 108 124
- US-B1- 7 979 147

## Beschreibung

Die Erfindung betrifft ein Verfahren zur Information eines Fahrers bezüglich des Betriebszustands eines Kraftfahrzeuges, welches Kraftfahrzeug wenigstens einen mit fester Übersetzung zum Antrieb des Kraftfahrzeuges arbeitenden Elektromotor umfasst.

In modernen Kraftfahrzeugen, beispielsweise Hybridkraftfahrzeugen oder Elektrofahrzeugen, werden Elektromotoren eingesetzt, die mit einer festen Übersetzung das Kraftfahrzeug antreiben. Ein Elektromotor kann dabei beispielsweise in einem Drehzahlbereich von 0 bis 12000 U/min den gesamten gewünschten Geschwindigkeitsbereich abdecken.

Um dem Fahrer den Betriebszustand des Elektromotors zu vermitteln, wurden sogenannte "Power Meter" vorgeschlagen, die gemeinsam mit einer Genschwindigkeitsanzeige (Tachometer) beispielsweise an einer Kombinationsanzeigevorrichtung dargestellt werden können. Das Power Meter zeigt in Abhängigkeit von einer Betriebsgröße des Elektromotors, beispielsweise abhängig von dessen tatsächlicher Drehzahl, einen nicht näher spezifizierten Wert an, der jedoch für einen Fahrer, der Handschalter oder Automatikgetriebe gewöhnt ist, zum einen ungewohnt und schwer verständlich ist, zum anderen aber auch schwer zu interpretieren sein kann, bedenkt man, dass ein Elektromotor beispielsweise bei niedrigen Drehzahlen einen eher schlechten Wirkungsgrad aufweist und ein verbesserter Wirkungsgrad dann meist erst bei höheren Drehzahlen und/oder höheren Geschwindigkeiten erzielt wird.

Die gattungsgemäße EP2202111A offenbart eine Motorschallerzeugungsvorrichtung, die an ein elektrisches Fahrzeug angepasst ist, und eine Motordrehzahlberechnungseinheit umfasst, die die virtuelle Motordrehzahl basierend auf der Motordrehzahl, Fahrzeuggeschwindigkeit und Gaspedalöffnung berechnet.

Der Erfindung liegt daher die Aufgabe zugrunde, ein Verfahren anzugeben, das dem Kunden eine verbesserte Rückmeldung zum Betriebszustand des Kraftfahrzeugs gibt, insbesondere eine intuitiv verständliche Rückmeldung.

Zur Lösung dieser Aufgabe ist bei einem Verfahren der eingangs genannten Art erfindungsgemäß vorgesehen, dass bei Betrieb des Elektromotors kontinuierlich aus wenigstens einem den Betriebszustand des Kraftfahrzeugs beschreibenden ersten Betriebsparameter eine virtuelle Drehzahl und eine virtuelle Schaltstufe ermittelt werden und eine akustische Ausgabe, insbesondere eine Ausgabe eines Motorengeräuschs, in Abhängigkeit von der virtuellen Drehzahl und der virtuellen Schaltstufe erfolgt.

Um dem Kunden eine bessere Rückmeldung zum Fahrzustand bei einem Kraftfahrzeug mit einem Elektromotor zu geben, wird mithin vorgeschlagen, den aktuellen Betriebszustand, beschrieben durch wenigstens einen ersten Betriebsparameter, in eine virtuelle Drehzahl und eine virtuelle Schaltstufe zu übersetzen, mithin ein Konzept, das dem Fahrer bereits aus Kraftfahrzeugarten mit einer wechselnden Übersetzung, also unterschiedlichen Fahrstufen, bekannt ist. Beispielsweise kann das Verhalten eines Automatikgetriebes abgebildet werden. Wird nun eine entsprechende akustische Ausgabe, also eine bestimmte Geräuschkulisse, erzeugt, insbesondere auch eine Veränderung bei einem virtuellen Schalten, kann sich der Fahrer besonders vorteilhaft in das durch den Elektromotor betriebene Kraftfahrzeug "einhören", das bedeutet, mit der Zeit wird ihm akustisch immer deutlicher bewusst, in welchem Betriebszustand sich das Kraftfahrzeug befindet. Hier werden mit besonderem Vorteil Motorengeräusche innerhalb und/oder außerhalb des Kraftfahrzeugs durch entsprechende akustische Ausgabemittel, insbesondere Lautsprecher, erzeugt. Hierdurch sind den Betriebszuständen, wenigstens aber ihrer Abfolge, Geräuschkulissen zugeordnet, die der Fahrer mit der Zeit erkennt und interpretiert. Insbesondere wird er informiert, ohne einen Blick auf Instrumente zu benötigen, nachdem Fahrer häufig auch nach Gehör fahren. Es wird mithin ein angenehmes, reproduzierbares Elektro-Fahrgeräusch erzeugt, das sich an die Motorengeräusche bei einem Schaltgetriebe, insbesondere einem Automatikgetriebe, anlehnt, indem eine virtuelle Drehzahl und eine virtuelle Schaltstufe ermittelt und betrachtet werden.

Das erfindungsgemäße Verfahren wird mit besonderem Vorteil bei Elektrofahrzeugen eingesetzt, ist jedoch auch bei Hybridfahrzeugen anwendbar, bei denen der Elektromotor über ein festes, also unveränderliches Übersetzungsverhältnis angekoppelt ist.

Vorzugsweise kann zusätzlich eine optische Anzeige der virtuellen Drehzahl, insbesondere in Form eines Drehzahlmessers, und/oder der virtuellen Schaltstufe erfolgen. Es kann mithin beispielsweise an einer Kombinationsanzeigevorrichtung neben einem Tachometer auch, wie insbesondere von Kraftfahrzeugen mit einem Verbrennungsmotor bekannt, ein Drehzahlmesser dargestellt werden, der die virtuelle Drehzahl dem Fahrer zur Kenntnis bringt. Auch die Schaltstufe kann entsprechend, beispielsweise benachbart dem Drehzahlmesser und/oder in diesen integriert dargestellt werden. Bei einem Drehzahlmesser kann mithin beispielsweise die Zeigerposition abhängig von der bestimmten virtuellen Drehzahl angepasst werden. Der Bereich, in dem die bestimmte virtuelle Drehzahl liegen kann, kann beispielsweise zwischen 0 und 9000 U/min liegen. Dies verbessert die Rückmeldung zum Betriebszustand weiter, nachdem der Fahrer die bekannten Konzepte bei einem zu schaltenden Kraftfahrzeug, insbesondere einem Automatik-Kraftfahrzeug, auf das durch den Elektromotor betriebene Kraftfahrzeug übertragen kann und sowohl akustisch als auch optisch eine entsprechende Wiedergabe vorfindet.

In konkreter Ausgestaltung der vorliegenden Erfindung kann vorgesehen sein, dass als Betriebsparameter zur Ermittlung der virtuellen Drehzahl und der virtuellen Schaltstufe die aktuelle Drehzahl des Elektromotors und/oder die aktuelle Geschwindigkeit des Kraftfahrzeugs und/oder die Gaspedalstellung betrachtet werden. Mit besonderem Vorteil werden alle drei dieser ersten Betriebsparameter betrachtet. Diese Betriebsparameter beschreiben hinreichend genau den aktuellen Betriebszustand des Kraftfahrzeugs und letztlich über die Gaspedalstellung auch den Fahrerwunsch. Selbstverständlich sind jedoch auch andere erste Parameter denkbar, die betrachtet werden können, beispielsweise die aktuelle Leistungsaufnahme des Elektromotors oder dergleichen.

In Weiterbildung der vorliegenden Erfindung kann vorgesehen sein, dass bei der Ermittlung der virtuellen Drehzahl und der virtuellen Schaltstufe wenigstens ein Kennfeld und/oder der zeitliche Verlauf wenigstens eines der Betriebsparameter berücksichtigt wird. Während es grundsätzlich denkbar ist, lediglich ein Kennfeld zu verwenden, bei dem jedem Satz von ersten Betriebsparametern ein bestimmter virtueller Betriebszustand, mithin eine bestimmte virtuelle Schaltstufe und eine virtuelle Drehzahl, zugeordnet sind, wird es erfindungsgemäß bevorzugt, wenn über den zeitlichen Verlauf wenigstens eines der ersten Betriebsparameter auch die Dynamik eines Schaltverhaltens abgebildet wird, beispielsweise wiederum einem Automatikgetriebe nachgebildet, da hierüber dem Fahrer weitere Information vermittelt werden kann. So ist es in weiterer Ausgestaltung der vorliegenden Erfindung beispielsweise denkbar, dass jeder virtuellen Schaltstufe ein Kennfeld zugeordnet ist, das den aktuellen ersten Betriebsparametern eine virtuelle Drehzahl zuordnet. Zusätzlich zu diesen Kennfeldern sind virtuelle Schaltbedingungen vorzusehen, die auch den Verlauf der ersten Betriebsparameter berücksichtigen können und somit letztlich zwischen den virtuellen Schaltstufen und damit auch den Kennfeldern umschalten.

Wie bereits erwähnt wird es besonders bevorzugt, wenn durch die virtuelle Drehzahl und die virtuelle Schaltstufe das Schaltverhalten eines Automatikgetriebes nachgebildet wird. So kann beispielsweise vorgesehen sein, dass nach einem Halten einer einen Schwellwert übersteigenden virtuellen Drehzahl in einem Toleranzbereich für eine vorbestimmte Zeitspanne die virtuelle Schaltstufe erhöht und die virtuelle Drehzahl erniedrigt wird. Auf diese Weise kann ein Schaltvorgang eines Automatikgetriebes nach einer Beschleunigungsphase abgebildet werden. Wird beispielsweise in der vierten virtuellen Schaltstufe bis 8000 virtuelle U/min beschleunigt und dann für eine vorbestimmte Zeitdauer dies gehalten, beispielsweise für 2 bis 8 Sekunden, dann kann in einen virtuellen sechsten Gang gewechselt und die virtuelle Drehzahl auf 4000 U/min reduziert werden. Diese virtuellen Schaltvorgänge werden akustisch und gegebenenfalls auch optisch entsprechend dargestellt und sind daher durch den Fahrer erfahrbar. Selbstverständlich sind auch noch andere Szenarien denkbar, in denen ein derartiges Schaltverhalten eines Automatikgetriebes abgebildet wird, beispielsweise das Herunterschalten bei einer niedrigen virtuellen Drehzahl und einem stark getretenen Gaspedal. Dies ist besonders vorteilhaft nutzbar im Zusammenhang mit einer Ausgestaltung, in der die virtuellen Parameter mit einer bestimmten, diese berücksichtigenden Ansteuerung kombiniert sind, wobei dann letztlich erreicht werden kann, dass der - vom Fahrer ja übertragene - Informationsgehalt der virtuellen Drehzahl und der virtuellen Schaltstufe auch in entsprechende Konsequenzen beispielsweise bezüglich der Effizienz des Kraftfahrzeugs umgesetzt wird, worauf im Folgenden noch näher eingegangen werden wird. In jedem Fall lässt sich ein derartiges Nachbilden des Schaltverhaltens eines Automatikgetriebes besonders zweckmäßig mit der bereits erwähnten Realisierung erreichen, in der Kennfelder für die verschiedenen virtuellen Schaltstufen gemeinsam mit Schaltbedingungen, die auch auf der Historie der Betriebsparameter basieren können, vorgesehen sind.

In einer besonders vorteilhaften Ausgestaltung der vorliegenden Erfindung kann vorgesehen sein, dass eine Ansteuerung wenigstens eines Fahrzeugsystems in Abhängigkeit der virtuellen Drehzahl und/oder der virtuellen Schaltstufe und/oder des zeitlichen Verlaufs der virtuellen Drehzahl und/oder der virtuellen Schaltstufe erfolgt. Ersichtlich kann das Verhalten von Fahrzeugsystemen in Abhängigkeit der virtuellen Drehzahl und der virtuellen Schaltstufe beeinflusst werden, beispielsweise um ein vom Fahrer intuitiv erwartetes Verhalten bei einem den virtuellen Parametern entsprechenden Betriebszustand auch tatsächlich zu realisieren, so dass auch der diesbezügliche Erfahrungsschatz des Fahrers auf das mit dem Elektromotor betriebene Kraftfahrzeug übertragbar wird. Zum anderen lässt sich durch die Ansteuerung von Fahrzeugsystemen die Information des Fahrers verbessern.

So kann beispielsweise vorgesehen sein, dass bei einer Veränderung der virtuellen Schaltstufe ein für den Fahrer spürbarer Längsruck des Kraftfahrzeuges erzeugt wird, insbesondere durch eine kurzzeitige Erniedrigung der tatsächlichen Drehzahl des Elektromotors. Bei einem Wechsel der virtuellen Schaltstufe wird dem Fahrer nun also auch ein - letztlich von ihm erwartetes - haptisches Feedback gegeben, welches idealer Weise keine Beeinträchtigung des Fahrkomforts darstellt, nichtsdestotrotz die deutliche Information trägt, dass soeben die virtuelle Schaltstufe gewechselt wurde. Es bietet sich in diesem Zusammenhang an, dies über die Ansteuerung des Elektromotors zu realisieren, jedoch können auch andere Systeme kurz angesteuert werden, beispielsweise ein Bremssystem und/oder ein aktives Fahrwerksystem, falls dieses auch die Erzeugung von Längsrucken erlaubt. Letztlich wird in dieser Ausgestaltung also der Schaltruck nachgebildet.

In einem weiteren, besonders vorteilhaften Ausführungsbeispiel kann vorgesehen sein, dass wenigstens eine Leistungsschranke des Elektromotors in Abhängigkeit der virtuellen Drehzahl und/oder der virtuellen Schaltstufe und/oder des zeitlichen Verlaufs der virtuellen Drehzahl und/oder der virtuellen Schaltstufe gesetzt oder aufgehoben wird. Knüpft man beispielsweise an das oben bereits dargestellte Beispiel der erfolgten Beschleunigung und der virtuellen Hochschaltung von einem vierten in einen sechsten Gang an, so ergibt sich eine niedrigere virtuelle Drehzahl. Der Fahrer hat nun den Eindruck, effizienter zu fahren. Üblicherweise weisen Elektromotoren einen bestimmten Arbeitsbereich auf, in dem ein besonders hoher Wirkungsgrad gegeben ist. Wird die maximale Leistung von dem Elektromotor gefordert, so sinkt der Wirkungsgrad häufig rasch ab. Denkbar ist es im Rahmen des erfindungsgemäßen Verfahrens nun, beispielsweise bei Unterschreitung bestimmter, insbesondere von der virtuellen Teilstufe abhängiger Schwelldrehzahlen den Betrieb des Elektromotors derart einzuschränken, dass ein Schwellwert für den Wirkungsquerschnitt nicht unterschritten wird, beispielsweise also in einem optimalen Arbeitsbereich geblieben wird. Die Effizienz, deren Eindruck dem Fahrer vermittelt wird, wird mithin tatsächlich realisiert. Sollte der Fahrer eine starke Beschleunigung wünschen oder dergleichen, wird ja beispielsweise durch die Schaltbedingungen ohnehin ein virtuelles Schalten durchgeführt, beispielsweise wieder in einen niedrigeren Gang, so dass die hier vorgenommene beziehungsweise gesetzte Leistungsschranke des Elektromotors wieder aufgehoben wird Selbstverständlich sind auch andere Szenarien denkbar, in denen ein solcher Abgleich zwischen der Erwartungshaltung des Fahrers und dem tatsächlichen Verhalten des Kraftfahrzeugs geschaffen wird.

In diesem Zusammenhang ist es ebenso besonders vorteilhaft, wenn die Ermittlung der virtuellen Drehzahl und der virtuellen Schaltstufe in Abhängigkeit wenigstens eines den Betriebszustand des Kraftfahrzeugs beschreibenden weiteren Betriebsparameters gemeinsam mit einer Einschränkung und/oder Erweiterung der Betriebszustände des Elektromotors modifiziert wird. In diesem Fall können beispielsweise durch bestimmte Betriebszustände des Kraftfahrzeugs bereits gegebene Einschränkungen über die virtuelle Drehzahl und die virtuelle Schaltstufe auch dem Fahrer zur Kenntnis gebracht und plausibel gemacht werden. Beispielsweise ist es hier denkbar, dass als weiterer Betriebsparameter der Ladezustand einer den Elektromotor versorgenden Batterie verwendet wird. Über einen Elektromotor betriebene Kraftfahrzeuge können beispielsweise bei einem niedrigen Ladezustand des elektrischen Energiespeichers, der den Elektromotor versorgt, in einen anderen Betriebszustand verbracht werden, in dem möglichst energiesparend gefahren wird, beispielsweise der Elektromotor nur innerhalb eines vorgegebenen Bereiches, insbesondere eines optimalen Arbeitsbereiches, betrieben werden darf. Dann sind beispielsweise starke Beschleunigungen und dergleichen gegebenenfalls nicht mehr möglich. Fordert beispielsweise der Fahrer vor einem Überholvorgang eine starke Beschleunigung an, kann ihm die Einschränkung des Betriebs aufgrund der niedrigen Restenergie auch dadurch zur Kenntnis gebracht werden, dass die von ihm erwartete virtuelle Rückschaltung gerade nicht erfolgt, sondern in einem hohen Gang bei einer geringen virtuellen Drehzahl (also einer effizienten Fahrweise) verblieben wird. In diesem Fall könnten also beispielsweise bei einer Einschränkung des Betriebszustands des Elektromotors die oben bereits erwähnten Schaltbedingungen modifiziert werden oder dergleichen.

In weiterer Ausgestaltung des Erfindungsgedankens kann vorgesehen sein, dass bei der Ermittlung der virtuellen Drehzahl und der virtuellen Schaltstufe und/oder der akustischen Ausgabe wenigstens ein fahrerseitig einstellbarer Parameter, insbesondere ein Betriebsmodus und/oder ein Rekuperationswert, berücksichtigt werden.

Es ist mithin denkbar, dass die Art und Weise der Bestimmung der virtuellen Parameter beziehungsweise der Information von diversen Fahrerschnittstellen abhängig gemacht werden, beispielsweise von einem eingestellten Betriebsmodus (beispielsweise Sport, Economy, oder Komfort) oder einer eingestellten Rekuperationsstufe, was beispielsweise über Wippen am Lenkrad realisiert werden kann. Entsprechend wird ein auf den aktuellen Betriebsmodus des Kraftfahrzeugs abgestimmtes, den Erwartungen des Fahrers für diesen Betriebsmodus entsprechendes Gesamtpaket geboten.

Es sei an dieser Stelle noch darauf hingewiesen, dass auch abhängig vom Typ des betrachteten Kraftfahrzeugs jeweils kraftfahrzeugtypspezifische individuelle akustische Ausgaben ("Soundpakete") vorgesehen sein können, die mit der gegebenenfalls vorgesehenen optischen Anzeige gekoppelt werden können. So kann bei einem Stadtfahrzeug eine andere Geräuschkulisse gewünscht sein und erwartet werden als bei einem Sportwagen oder dergleichen. Es ist im Übrigen auch denkbar, die akustische Ausgabe und/oder die Ermittlung der virtuellen Schaltstufe und der virtuellen Drehzahl durch einen Fahrer anderweitig konfigurierbar zu gestalten, beispielsweise, indem entsprechende Soundpakete oder Gesamtpakete auf das Kraftfahrzeug aufgespielt werden, die beispielsweise im Internet zur Verfügung gestellt werden.

Neben dem Verfahren betrifft die Erfindung auch ein Kraftfahrzeug, umfassend wenigstens einen mit fester Übersetzung zum Antrieb des Kraftfahrzeuges arbeitenden Elektromotor, wenigstens ein akustisches Ausgabemittel und eine zur Ausführung des erfindungsgemäßen Verfahrens ausgebildete Steuereinrichtung. Sämtliche Ausführungen bezüglich des erfindungsgemäßen Verfahrens lassen sich analog auf das erfindungsgemäße Kraftfahrzeug übertragen, mit welchen auch die bereits genannten Vorteile erreicht werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen Ablaufplan zum erfindungsgemäßen Verfahren,
- Fig. 3: ein möglicher zeitlicher Verlauf der virtuellen Drehzahl und der virtuellen Schaltstufe, und
- Fig. 4: eine mögliche optische Anzeige im Rahmen der vorliegenden Erfindung.

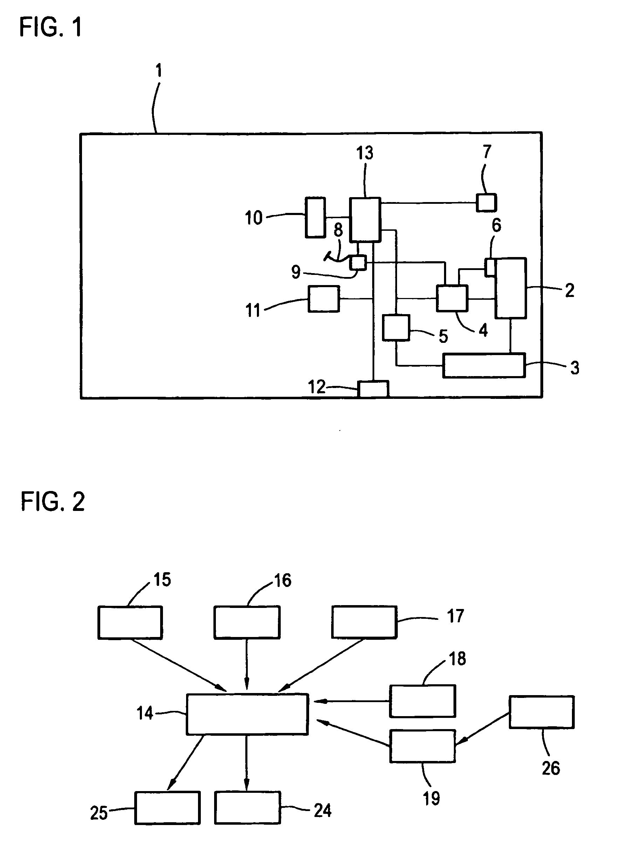

Fig. 1 zeigt eine Prinzipskizze eines erfindungsgemäßen Kraftfahrzeugs 1. Bei dem Kraftfahrzeug 1 handelt es sich um ein Kraftfahrzeug mit einem Elektromotor 2, konkret im vorliegenden Ausführungsbeispiel um ein Elektrofahrzeug. Der Elektromotor 2 treibt mit einer festen, also unveränderlichen Übersetzung wenigstens ein nicht näher dargestelltes Rad des Kraftfahrzeugs 1 an, um dieses fortzubewegen. Als Energiespeicher für den Elektromotor 2 ist eine Hochspannungsbatterie 3 vorgesehen. Sowohl dem Elektromotor 2 als auch der Hochspannungsbatterie 3 ist jeweils ein Steuergerät 4, 5 zugeordnet. Die Drehzahl des Elektromotors 2 kann über einen entsprechenden Drehzahlsensor 6 gemessen werden. Ein weiterer Sensor 7 misst die aktuelle Geschwindigkeit des Kraftfahrzeugs 1.

Die Ansteuerung des Elektromotors 2 erfolgt ferner in Abhängigkeit der Betätigung eines Gaspedals 8, dem ebenso ein Sensor 9 zugeordnet ist, welcher die Gaspedalstellung misst.

Zur Information des Fahrers über den Betriebszustand des Kraftfahrzeugs umfasst das Kraftfahrzeug 1 ferner eine Kombinationsanzeigevorrichtung 10 (häufig auch als Kombinationsdisplay bezeichnet) sowie akustische Ausgabemittel 11, 12, die in der Lage sind, eine akustische Ausgabe des Betriebszustandes des Kraftfahrzeugs 1 in Form von künstlichen Motorgeräuschen vorzunehmen. Der Betrieb der Kombinationsanzeigevorrichtung 10 und der akustischen Ausgabemittel 11, 12 wird durch ein Steuergerät 13 gesteuert, das auch zur Durchführung des erfindungsgemäßen Verfahrens ausgebildet ist.

Das bedeutet, dass das Steuergerät 13 im vorliegenden Ausführungsbeispiel unter Berücksichtigung der aktuellen Drehzahl des Elektromotors 2, der aktuellen Geschwindigkeit des Kraftfahrzeugs 1 und der Stellung des Gaspedals 8 als erste Betriebsparameter zur Ermittlung einer virtuellen Drehzahl und einer virtuellen Schaltstufe ausgebildet ist, wobei das Schaltverhalten eines Automatikgetriebes nachgebildet wird. Das Steuergerät 13 erzeugt eine optische Anzeige der virtuellen Drehzahl und der virtuellen Schaltstufe an der Kombinationsanzeigevorrichtung 10 und eine akustische Ausgabe, hier eine Ausgabe eines Motorengeräuschs, an den akustischen Ausgabemitteln 11, 12.

Dies sei durch den Ablaufplan des erfindungsgemäßen Verfahrens in Fig. 2 nochmals näher erläutert. Dabei sei nochmals hervorgehoben, dass es sich bei der Darstellung in Fig. 2 lediglich um ein Ausführungsbeispiel handelt; selbstverständlich sind auch andere Realisierungen der konkreten Berechnung und Verwendung der virtuellen Drehzahl und der virtuellen Schaltstufe denkbar, insbesondere andere Abhängigkeiten und Berechnungsregeln.

Wird in einem Schritt 14 die aktuelle virtuelle Drehzahl und die aktuelle virtuelle Schaltstufe berechnet, finden als grundlegende Eingangswerte, mithin erste Betriebsparameter, hier die Fahrzeuggeschwindigkeit 15, die Drehzahl 16 des Elektromotors 2 und die Gaspedalstellung 17 Eingang. Innerhalb des Steuergeräts 13 sind nun in einer Speichereinrichtung zunächst Kennfelder 18 abgelegt, und zwar für jede virtuelle Schaltstufe, wobei beispielsweise sechs virtuelle Schaltstufen vorgesehen sein können, wobei jedes Kennfeld wenigstens einen Teil der ersten Betriebsparameter mit einer virtuellen Drehzahl in Verbindung setzt. Welche virtuelle Schaltstufe und somit welche virtuelle Drehzahl am Ende ermittelt werden, hängt von Schaltbedingungen 19 ab, die ebenfalls in der Speichereinrichtung des Steuergeräts 13 abgelegt sein können. Diese Schaltbedingungen berücksichtigen nicht nur den aktuellen Wert der ersten Betriebsparameter 15, 16 und 17, sondern auch deren zeitlichen Verlauf, der zu diesem Zweck in dem Steuergerät 13 vorgehalten wird. Sowohl die Kennfelder 18 als auch die Schaltbedingungen 19 sind dabei so gewählt, dass das Schaltverhalten eines Automatikgetriebes nachgebildet wird.

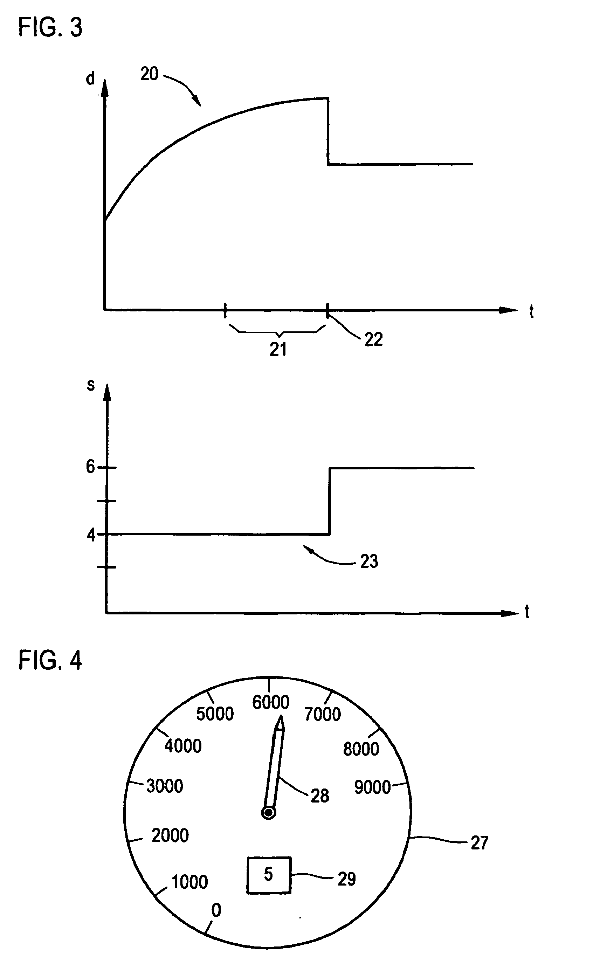

Ein Beispiel für den Verlauf der virtuellen Parameter, also der virtuellen Schaltstufe und der virtuellen Drehzahl, ist in Fig. 3 für den Fall dargestellt, dass ein Fahrer auf der Autobahn stark bis zu einer bestimmten Geschwindigkeit beschleunigt. Sodann ändern sich die Gaspedalstellung 17, die Geschwindigkeit 15 und die Drehzahl 16 kaum noch. Entsprechend bleibt auch die virtuelle Drehzahl, Verlauf 20, zunächst konstant. Findet innerhalb eines vorbestimmten Zeitraums, vorliegend beispielshalber 3 Sekunden, keine einen Toleranzbereich übersteigende Änderung statt, so wird zu einem Zeitpunkt 22 in die virtuelle sechste Schaltstufe geschaltet, wie aus dem Verlauf 23 ersichtlich ist. Entsprechend sinkt die virtuelle Drehzahl, Verlauf 20. Das bedeutet, die virtuelle Drehzahl und die virtuelle Schaltstufe verhalten sich hier, wie es der Fahrer auch von einem Automatikgetriebe erwarten würde. Um effektiv beschleunigen zu können, wird zunächst in einem niedrigen Gang bei hohen Drehzahlen gearbeitet, bis eine gewünschte Zielgeschwindigkeit durch den Fahrer erreicht ist, woraufhin zum effizienteren Fahren hochgeschaltet wird und sich mithin die Drehzahl erniedrigt, so dass das Kraftfahrzeug 1 auch ruhiger läuft.

Tritt der Fahrer später wieder stark das Gaspedal 8, kann in Nachbildung des Automatikgetriebes beispielsweise nach unten geschaltet werden und dergleichen. Dies ergibt sich entsprechend aus den Schaltbedingungen 19. Die ermittelte virtuelle Drehzahl und die ermittelte virtuelle Schaltstufe werden im in Fig. 2 dargestellten Ausführungsbeispiel in einem Schritt 24 nicht nur zur Information des Fahrers über den Betriebszustand des Kraftfahrzeugs 1 mittels der Kombinationsanzeigevorrichtung 10 und der akustischen Ausgabemittel 11, 12 genutzt, sondern es erfolgt auch eine veränderte Ansteuerung des Elektromotors 2 in einem Schritt 25, konkret, indem bei bestimmten Werten der virtuellen Drehzahl und der virtuellen Schaltstufe Einschränkungen bezüglich dessen Betriebs vorgenommen werden, die bei Vorliegen anderer virtueller Schaltstufen und virtueller Drehzahlen wieder aufgehoben werden können. Damit soll auch das Effizienzverhalten eines Automatikgetriebes abbildbar sein.

So kann vorgesehen sein, dass immer dann, wenn bei bestimmten virtuellen Schaltstufen eine bestimmte virtuelle Drehzahl unterschritten ist, ein bestimmter, effizienter Arbeitsbereich, in dem beispielsweise der Wirkungsgrad einen vorbestimmten Grenzwert überschreitet, nicht verlassen wird. Auf diese Weise wird die Erwartungshaltung des Fahrers abgebildet. Denn wenn eine hohe Schaltstufe bei niedriger Drehzahl angezeigt wird, geht der Fahrer davon aus, dass das Fahrzeug 1 äußerst effizient fährt. Eine Einschränkung im Fahrverhalten des Fahrers ist hiermit nicht verbunden, nachdem die Schaltbedingungen es beispielsweise beim Gasgeben ja zwangsläufig vorsehen, dass ein virtueller Schaltvorgang stattfindet und die Einschränkung mithin wieder aufgehoben werden.

Doch der Elektromotor 2 kann in Schritt 25 noch auf andere Art und Weise angesteuert werden, konkret, um einen Schaltruck immer dann wieder zu geben, wenn ein Wechsel der virtuellen Schaltstufe stattgefunden hat. Konkret kann hierzu vorgesehen sein, kurz die Drehzahl des Elektromotors 2 leicht zu reduzieren, so dass ein Längsruck in dem Kraftfahrzeug 1 erzeugt wird, der dem Fahrer einen Hinweis auf den stattgefundenen virtuellen Schaltstufenwechsel gibt, ohne diesen jedoch in seinem Komfort zu beeinträchtigen. So kann die Information des Fahrers weiter verbessert werden.

Insgesamt ermöglicht das erfindungsgemäße Verfahren so also eine differenziertere, besser erlernbare und intuitive Information über den Betriebszustand des Kraftfahrzeugs 1. Nachdem durch die Nachbildung des Automatikgetriebes dem Fahrer grundsätzlich bekannte Vorgänge abgebildet werden, kann er sich beispielsweise, was die akustische Ausgabe betrifft, leicht in das Verhalten des Kraftfahrzeugs 1 "einhören", so dass er auch ohne einen Blick auf die Kombinationsanzeigevorrichtung 10 oder sonstige Anzeigemittel abschätzen kann, in welchem Betriebszustand sich das Kraftfahrzeug 1 sich gerade befindet.

Es sei an dieser Stelle noch angemerkt, dass das erfindungsgemäße Verfahren auch genutzt werden kann, um Veränderungen weiterer Betriebsparameter zu berücksichtigen, die beispielsweise Einschränkungen im Betrieb des Kraftfahrzeugs 1 mit sich bringen. Vorliegend ist beispielsweise vorgesehen, dass bei Unterschreiten einer vorbestimmten Restenergie in der Hochspannungsbatterie 3 der Elektromotor 2 nur noch in einem bestimmten, eingeschränkten Arbeitsbereich betrieben werden kann, beispielsweise wiederum in einem Arbeitsbereich, in dem der Wirkungsgrad den oder einen Schwellwert überschreitet. Die Information 26 über die Restenergie kann nun auch genutzt werden, um die Schaltbedingungen 19 derart zu modifizieren, dass beispielsweise kein virtuelles Rückschalten mehr erfolgt, was das langsamere Beschleunigen für den Fahrer intuitiv erklärt.

Besonders vorteilhaft ist dies, wenn in Schritt 25 ohnehin die beschriebene Einschränkung des Betriebs des Elektromotors 2 vorgenommen wird, da dann das erfindungsgemäße Verfahren bereits vollständig ausreichend ist, um diese Einschränkung grundsätzlich vorzunehmen. Wird gemäß der aktuellen Schaltbedingungen 19 nämlich nicht zurückgeschaltet, werden Einschränkungen nicht aufgehoben und der Elektromotor 2 wird zwangsläufig effizient betrieben, ohne dass es einer weiteren Funktionalität bedürfte.

Es sei an dieser Stelle ferner angemerkt, dass neben einer Beeinflussung über den Ladezustand der Hochspannungsbatterie 3 (Information 26) als weiterer, also zweiter Betriebsparameter auch eine Abhängigkeit der Ermittlung im Schritt 14 oder der Ausgabe in Schritt 24 von fahrerseitig einstellbaren Parametern vorgesehen werden kann. Beispielsweise können die erzeugten Motorgeräusche und das durch die Schaltbedingungen 19 und die Kennfelder 18 beschriebene Verhalten in Abhängigkeit eines eingestellten Betriebsmodus des Kraftfahrzeugs 1 unterschiedlich ausgestaltet werden, beispielsweise, indem in einem eingestellten sportlichen Betriebsmodus früher und schneller virtuell geschaltet wird und lautere Motorgeräusche erzeugt werden, während die Motorgeräusche in einem Komfort-Betriebsmodus eher leise wiedergegeben werden können und ein sanftes Schalten stattfinden kann. Als weiterer fahrerseitig einstellbarer Parameter, der die Ermittlung der virtuellen Schaltstufe und der virtuellen Drehzahl beziehungsweise die Ausgabe beeinflussen kann, sei auch der beispielsweise über eine Wippe am Lenkrad einstellbare Rekuperationswert genannt.

Es ist jedoch auch denkbar, dem Fahrer sogar zu gestatten, unterschiedliche "Soundpakete" in dem Steuergerät 13 einzuspeichern und auszuwählen.

Schließlich zeigt Fig. 4 eine beispielhafte Möglichkeit zur optischen Anzeige der virtuellen Drehzahl und der virtuellen Schaltstufe an der Kombinationsanzeigevorrichtung 10. Dabei wird hier ein Drehzahlmesser 27 angezeigt, an dem über die Position eines Zeigers 28 die Drehzahl abgelesen werden kann. In einem in den Drehzahlmesser 27 integrierten Informationsfeld 29 wird die aktuelle virtuelle Schaltstufe angezeigt. Auch optisch kann mithin der Eindruck des virtuellen Automatikgetriebes vervollständigt werden.

## Patentansprüche

1. Verfahren zur Information eines Fahrers bezüglich des Betriebszustands eines Kraftfahrzeuges (1), welches Kraftfahrzeug (1) weinigstens einen mit fester Übersetzung zum Antrieb des Kraftfahrzeuges (1) arbeitenden Elektromotor (2) umfasst, wobei bei Betrieb des Elektromotors (2) kontinuierlich aus wenigstens einem den Betriebszustand des Kraftfahrzeugs (1) beschreibenden ersten Betriebsparameter eine virtuelle Drehzahl und eine virtuelle Schaltstufe ermittelt werden und eine akustische Ausgabe in Abhängigkeit von der virtuellen Drehzahl und der virtuellen Schaltstufe erfolgt,
**dadurch gekennzeichnet,**
**dass** in Abhängigkeit wenigstens eines den Betriebszustand des Kraftfahrzeugs (1) beschreibenden weiteren Betriebsparameters gemeinsäm sowohl ein vorgegebener Bereich der Betriebszustände des Elektromotors (2), innerhalb dessen der Elektromotor (2) betrieben werden darf, eingeschränkt und/oder erweitert wird, als auch die Ermittlung der virtuellen Drehzahl und der virtuellen Schaltstufe modifiziert wird.

2. Verfahren nach Anspruch 1,
**dadurch gekennzeichnet,**
**dass** zusätzlich eine optische Anzeige der virtuellen Drehzahl und/oder der virtuellen Schaltstufe erfolgt.

3. Verfahren nach Anspruch 1 oder 2,
**dadurch gekennzeichnet,**
**dass** als Betriebsparameter zur Ermittlung der virtuellen Drehzahl und der virtuellen Schaltstufe die aktuelle Drehzahl (16) des Elektromotors (2) und/oder die aktuelle Geschwindigkeit (15) des Kraftfahrzeugs (1) und/oder die Gaspedalstellung betrachtet werden.

4. Verfahren nach einem der vorangehenden Ansprüche,
**dadurch gekennzeichnet,**
**dass** bei der Ermittlung der virtuellen Drehzahl und der virtuellen Schaltstufe wenigstens ein Kennfeld (18) und/oder der zeitliche Verlauf wenigstens eines der Betriebsparameter berücksichtigt wird.

5. Verfahren nach Anspruch 4,
**dadurch gekennzeichnet,**
**dass** durch die virtuelle Drehzahl und die virtuelle Schaltstufe das Schaltverhalten eines Automatikgetriebes nachgebildet wird.

6. Verfahren nach einem der vorangehenden Ansprüche,
**dadurch gekennzeichnet,**
**dass** eine Ansteuerung wenigstens eines Fahrzeugsystems in Abhängigkeit der virtuellen Drehzahl und/oder der virtuellen Schaltstufe und/oder des zeitlichen Verlaufs der virtuellen Drehzahl und/oder der virtuellen Schaltstufe erfolgt.

7. Verfahren nach Anspruch 6,
**dadurch gekennzeichnet,**
**dass** bei einer Veränderung der virtuellen Schaltstufe ein für den Fahrer spürbarer Längsruck des Kraftfahrzeuges (1) erzeugt wird.

8. Verfahren nach Anspruch 6 oder 7,
**dadurch gekennzeichnet,**
**dass** wenigstens eine Leistungsschranke des Elektromotors (2) in Abhängigkeit der virtuellen. Drehzahl und/oder der virtuellen Schaltstufe und/oder des zeitlichen Verlaufs der virtuellen Drehzahl und/oder der virtuellen Schaltstufe gesetzt oder aufgehoben wird.

9. Verfahren nach einem der vorangehenden Ansprüche,
**dadurch gekennzeichnet,**
**dass** als weiterer Betriebsparameter der Ladezustand einer den Elektromotor (2) versorgenden Batterie (3) verwendet wird.

10. Verfahren nach einem der vorangehenden Ansprüche,
**dadurch gekennzeichnet,**
**dass** bei der Ermittlung der virtuellen Drehzahl und der virtuellen Schaltstufe und/oder der akustischen Ausgabe wenigstens ein fahrerseitig einstellbarer Parameter berücksichtigt.werden.

11. Kraftfahrzeug (1), umfassend wenigstens einen mit fester Übersetzung zum Antrieb des Kraftfahrzeuges (1) arbeitenden Elektromotor (2), wenigstens ein akustisches Ausgabemittel (11, 12) und eine zur Ausführung eines Verfahrens nach einem der vorangehenden Ansprüche ausgebildete Steuereinrichtung (13).

## Claims

1. Method for providing information to a driver relating to the operational state of a motor vehicle (1), which motor vehicle (1) comprises at least one electric motor (2) operating with a fixed gear ratio for driving the motor vehicle (1), wherein during operation of the electric motor (2) a virtual speed and a virtual shift stage are continuously determined from at least one first operating parameter describing the operational state of the motor vehicle (1), and an acoustic output results dependent on the virtual speed and the virtual shift stage, **characterised in that**, dependent on at least one further operating parameter describing the operational state of the motor vehicle (1), a specified region of the operational states of the electric motor (2), within which the electric motor (2) may be operated, is restricted and/or expanded, and the determination of the virtual speed and the virtual shift stage is modified.

2. Method according to claim 1, **characterised in that**, in addition, a visual display of the virtual speed and/or the virtual shift stage results.

3. Method according to claim 1 or 2, **characterised in that** the current speed (16) of the electric motor (2) and/or the current speed (15) of the motor vehicle (1) and/or the accelerator pedal position are regarded as operating parameters for determining the virtual speed and the virtual shift stage.

4. Method according to one of the preceding claims, **characterised in that** at least one characteristic map (18) and/or the time curve of at least one of the operating parameters is taken into account for determination of the virtual speed and the virtual shift stage.

5. Method according to claim 4, **characterised in that** the shift behaviour of an automatic transmission is reproduced through the virtual speed and the virtual shift stage.

6. Method according to one of the preceding claims, **characterised in that** an activation of at least one vehicle system results depending on the virtual speed and/or the virtual shift stage and/or the time curve of the virtual speed and/or the virtual shift stage.

7. Method according to claim 6, **characterised in that**, in the event of a change in the virtual shift stage, a longitudinal jerk of the vehicle (1) is created that is noticeable to the driver.

8. Method according to claim 6 or 7, **characterised in that** at least one power cabinet of the electric motor (2) is set or cancelled depending on the virtual speed and/or the virtual shift stage and/or the time curve of the virtual speed and/or the virtual shift stage.

9. Method according to one of the preceding claims, **characterised in that** the charge status of a battery (3) supplying the electric motor (2) is used as a further operating parameter.

10. Method according to one of the preceding claims, **characterised in that** at least one driver-side adjustable parameter is taken into account in the determination of the virtual speed and the virtual shift stage and/or the acoustic output.

11. Motor vehicle (1), comprising at least one electric motor (2) having a fixed gear ratio to drive the motor vehicle (1), at least one acoustic output means (11, 12) and one control device (13) configured for the execution of a method according to one of the preceding claims.

## Revendications

1. Procédé d'information d'un conducteur concernant l'état de fonctionnement d'un véhicule automobile (1), lequel véhicule automobile (1) comprend au moins un moteur électrique (2) fonctionnant avec un rapport fixe pour l'entraînement du véhicule automobile (1), dans lequel, lors du fonctionnement du moteur électrique (2), on détermine en continu à partir d'au moins un premier paramètre de fonctionnement décrivant l'état de fonctionnement du véhicule automobile (1) une vitesse de rotation virtuelle et un stade de commutation virtuel et il se produit une sortie acoustique en fonction de la vitesse de rotation virtuelle et du stade de commutation virtuel,
**caractérisé en ce que**,
en fonction d'au moins un autre paramètre de fonctionnement décrivant l'état de fonctionnement du véhicule automobile (1), on limite et/ou on élargit conjointement une plage prédéterminée des états de fonctionnement du moteur électrique (2), dans laquelle le moteur électrique (2) peut opérer, tout en modifiant la détermination de la vitesse de rotation virtuelle et du stade de commutation virtuel.

2. Procédé selon la revendication 1,
**caractérisé en ce que** :
un affichage optique de la vitesse de rotation virtuelle et/ou du stade de commutation virtuel se produit également.

3. Procédé selon la revendication 1 ou la revendication 2,
**caractérisé en ce que** :
on considère comme paramètre de fonctionnement pour déterminer la vitesse de rotation virtuelle et le stade de commutation virtuel la vitesse de rotation courante (16) du moteur électrique (2) et/ou la vitesse courante (15) du véhicule automobile (1) et/ou la position de l'accélérateur.

4. Procédé selon l'une quelconque des revendications précédentes,
**caractérisé en ce que**,
lors de la détermination de la vitesse de rotation virtuelle et du stade de commutation virtuel, on tient compte au moins d'un champ caractéristique (18) et/ou de l'évolution temporelle au moins d'un des paramètres de fonctionnement.

5. Procédé selon la revendication 4,
**caractérisé en ce que** :
le comportement de commutation d'une transmission automatique est simulé par la vitesse de rotation virtuelle et le stade de commutation virtuel.

6. Procédé selon l'une quelconque des revendications précédentes,
**caractérisé en ce que** :
une commande au moins d'un système de véhicule se produit en fonction de la vitesse de rotation virtuelle et/ou du stade de commutation virtuel et/ou de l'évolution temporelle de la vitesse de rotation et/ou du stade de commutation virtuel.

7. Procédé selon la revendication 6,
**caractérisé en ce que**,
lors d'une modification du stade de commutation virtuel, une secousse longitudinale du véhicule automobile (1) décelable par le conducteur se produit.

8. Procédé selon la revendication 6 ou la revendication 7,
**caractérisé en ce que** :
au moins une barrière de puissance du moteur électrique (2) est réglée ou suspendue en fonction de la vitesse de rotation virtuelle et/ou du stade de commutation virtuel et/ou de l'évolution temporelle de la vitesse de rotation virtuelle et/ou du stade de commutation virtuel.

9. Procédé selon l'une quelconque des revendications précédentes,
**caractérisé en ce que** :
on utilise comme autre paramètre de fonctionnement l'état de charge d'une batterie (3) alimentant le moteur électrique (2).

10. Procédé selon l'une quelconque des revendications précédentes,
**caractérisé en ce que**,
lors de la détermination de la vitesse de rotation virtuelle et du stade de commutation virtuel et/ou de la délivrance acoustique, on tient compte au moins d'un paramètre réglable côté conducteur.

11. Véhicule automobile (1) comprenant au moins un moteur électrique (2) opérant avec un rapport fixe pour le fonctionnement du véhicule automobile (1), au moins un moyen de délivrance acoustique (11, 12) et un dispositif de commande (13) conçu pour réaliser un procédé selon l'une quelconque des revendications précédentes.
